## Europäisches Patentamt
## European Patent Office
## Office européen des brevets

(19)

(11) Publication number: **0 134 099**
A2

(12)

# EUROPEAN PATENT APPLICATION

(21) Application number: **84305121.0**

(22) Date of filing: **27.07.84**

(51) Int. Cl.⁴: **B 01 J 39/20**, B 01 J 39/06, B 01 D 15/08

---

(30) Priority: **12.08.83 US 522827**

(43) Date of publication of application: **13.03.85 Bulletin 85/11**

(84) Designated Contracting States: **DE FR GB IT**

(71) Applicant: **DIONEX CORPORATION, 1228 Titan Way, Sunnyvale California 94086 (US)**

(72) Inventor: **Phol, Christopher A., 326 Burke Drive, Hayward California 94544 (US)**
Inventor: **Papanu, Steven C., 883 Lundy Lane, Los Altos California 94022 (US)**

(74) Representative: **Allard, Susan Joyce et al, BOULT, WADE & TENNANT 27 Furnival street, London EC4A 1PQ (GB)**

---

(54) **Coated cation exchange resin and method for forming.**

(57) A cation exchange latex is formed including dispersed fine soluble synthetic resin layering particles with strong acid (e.g. sulfonate) cation-exchanging sites at least on their exposed surfaces. Such as latex is contracted with insoluble resin support particles with strong base anion exchange sites at least on their exposed surfaces to form an ion exchange composition in which the layering particles are irreversibly attached as a monolayer to the support particles.

EP 0 134 099 A2

ACTORUM AG

-1-

## COATED CATION EXCHANGE RESIN
## AND METHOD FOR FORMING

The present invention relates to a method of forming a component of an ion exchange composition useful for performing liquid ion chromatography.

Ion chromatography is useful for anion or cation analysis, as described in U.S. Patent No. 3,920,397. A useful ion exchange composition includes insoluble synthetic resin substrate particles, having ion exchange sites at least on their exposed or available surface, and finely divided synthetic resin layering particles, having ion exchange sites at least on their outer surfaces. The layering particles are irreversibly attached as a monolayer to the support particles to produce a low capacity "pellicular type" ion exchanger, as described in U.S. Patent No. 4,101,460. At column 5, lines 21-24 of that patent, it is stated that the best performances are generally obtained using a latex to prepare the monolayer of layering particle, since a highly uniform monolayer can be obtained from a latex system. In accordance with conventional polymer terminology, a "latex" is a stable dispersion of fine polymer particles in an aqueous medium.

Even though the '460 patent recognizes the benefits of forming the pellicular resin using a latex of the layering particles, the specific disclosure is of forming the pellicular resin from a latex comprising the use of a latex with anion exchanging sites (herein, an "anion latex"), and does not disclose a latex with particles containing cation-exchanging sites (herein, "cation latex"). Instead, to form a pellicular cation-exchanging site resin, the patent only discloses the grinding of conventional ion exchange resin to a fine powder. It is recognized that such particles are not spherical, have a wide size distribution, and generally do not perform as well as ones formed from a latex.

There are significant advantages in ion chromatography in forming the pellicular resin using very small layering particles, as described in U.S. Patent No. 4,383,087. That patent refers specifically to layering particle having a volume average diameter of less than 900 microns, and only discloses the formation of the pellicular resin using the layering particles in latex form. This is because the other technique disclosed in the '460 patent of forming the layering particles, namely grinding, is not capable of forming suitable layering particles in this size range. However, the '087 patent is limited to anion-exchange pellicular resin. The logical conclusion to be drawn from this is that the patentee was unable to produce a cation latex.

One might assume that it would be a simple matter to provide an analogous technique for forming cation exchange latexes based upon the techniques disclosed for forming anion exchange latexes, e.g., in the '460 patent. That patent describes producing a neutral, water-insoluble polymer latex from cross-linked vinylbenzylchloride, and then functionalizing the latex to the desired form by reaction with a tertiary amine. The analogous procedure to form a cation latex would be to use the same procedure except that sulfite or bisulfite ion is used in place of the tertiary amine. The resulting product would be the sulfonated vinylbenzylchloride polymer instead of the quaternized vinylbenzyl polymer. This is an example of the Strecker reaction, in which alkyl halides are reacted with sulfites to synthesize sulfonate. However, attempts to use this procedure were unsuccessful.

In German patent 1,075,833 to Dow Chemical Company, the vinylbenzylchloride polymer is first converted to a dialkyl sulfonium intermediate, and then the sulfonium group is displaced with sulfite to form the sulfonate. However, the use of this procedure destabilizes the latex.

We have now developed a cation latex of fine insoluble synthetic resin particles with strong acid cation-exchanging sites on their exposed surfaces, which latex may be used to form a pellicular resin on support particles having an opposite charge, which is particularly suitable for use in an ion chromatography.

Accordingly, the present invention provides a cation exchange latex formed of dispersed fine insoluble synthetic resin particles with strong acid (e.g., sulfonic) cation-exchanging sites at least on their exposed surfaces.

The invention further relates to a method of forming such a latex, in which a monomer phase comprising a base monomer (e.g., styrene) and a cross-linking monomer (e.g., divinylbenzene), is mixed with an aqueous phase including a polymerization catalyst and a surfactant, preferably a non-ionic one, and the monomer phase is polymerized to form the latex. Thereafter, a sulfonating agent, preferably sulfuric acid, fuming sulfuric acid, or a mixture thereof, is used to sulfonate the resin while maintaining the latex in a stable form.

A strong acid cation exchange composition is formed by mixing the above latex with synthetic resin support particles having anion-exchanging sites at their exposed surfaces, which attract the cation-exchange sites of the latex particles to form layering particles which are irreversibly attached as a monolayer to the support particles. Such layering particles are characterized by a narrow width of distribution, sigma, and are capable of formation in a very fine size, i.e., less than 0.1 micron. Cation exchange compositions of the above type are particularly effective for the separation of cations by ion chromatography.

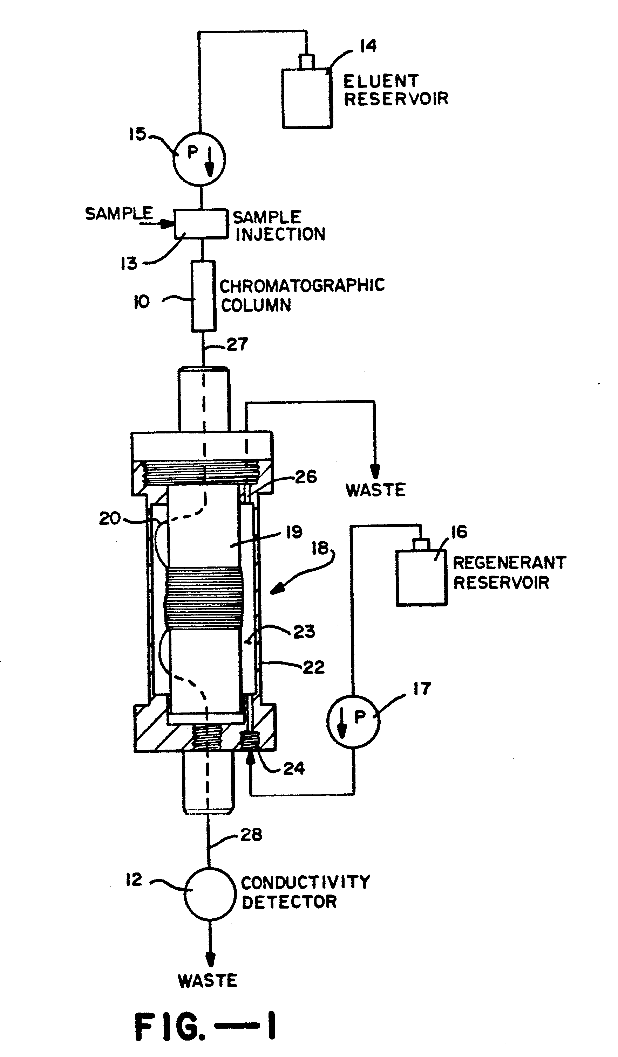

Figure 1 is a schematic representation of apparatus in which the cation exchange composition of the present invention is effectively used for chromatographic separation.

The ion exchange composition of the present invention includes synthetic resin support particles with anion exchange sites at their exposed surfaces to which fine synthetic resin layering particles with cation exchange sites on their exposed surfaces are irreversibly attached by attraction of the respective ion exchange sites. The present description will refer first to the support particles.

The support particles may be formed from the same type of synthetic resin as

described in the aforementioned '460 and '087 patents, incorporated herein by reference.

The support particles typically are sized with a median diameter between 3 microns and 100 microns, and preferably between 3 microns and 25 microns. In general, smaller substrate particles lead to higher chromatographic efficiencies.

The substrate particles may be relatively nonporous, or substantially porous, such as of the type known as "macroreticular" or "macroporous" resin. Substrate particles of the latter type are described in U.S. Patent No. 4,351,909. Typically, such particles will be nonporous, that is, retaining the porosity typically present in forming conventional nonporous resins.

The substrate particles have anion exchange sites on their exterior or outer available surfaces. Such sites are preferably strongly basic generally of aminated functional groups.

Although any of the polymers described in the above patents may be used as the substrate particles, particularly effective ones are synthetic resin beads of a styrene-divinylbenzene copolymer containing at least about 0.5% divinylbenzene cross-linking agent, where the beads are in the surface aminated form, and, preferably containing about 20% divinylbenzene for a fully aminated form of bead particle.

An important feature of the present invention is the method of forming the cation-exchanging particle and their use. Such layering particles are formed in a cation latex comprising an aqueous latex of dispersed fine insoluble synthetic resin particles with strong acid cation-exchanging sites on their surfaces. Suitable strong acid functional groups are sulfonate and phosphonate, while sulfonate is preferred.

Layering particles formed in a latex have certain highly desirable characteristics. Firstly, since the latex is a stable colloidal dispersion, the particles are readily distributed in a monolayer over the surface of the substrate particles. In addition, such particles are characterized by a relatively narrow width of distribution, sigma, of less than 10% and typically less than 5%. Furthermore, such particles are in relatively spherical form. Also, there is a great deal of flexibility in the ability to produce a median diameter of the desired size. This is particularly important with respect to the capability of forming extremely small particles. For example, as set forth in the '087 patent and in U.S. Patent No. 4,376,047, there are major advantages in effectiveness of ion chromatography by using layering particles of relatively small size. By the use of the latex procedure, the layering particle may have a median diameter below 1 micron, or even 0.1 micron or less, to as low as 0.002 micron or less. As used herein, the term "median diameter" is defined in the '460 patent. The latex procedure is to be contrasted with formation of small particles by grinding which cannot form particles in the low end of this size range.

The most common form of strong acid cation exchange functional group is sulfonate, and so the present description will refer to such sulfonate functional groups. The base polymer for forming such sulfonate groups may be the ones described in the '460 and '087 patents. Preferable ones are poly (aromatic and alkylaromatic) resins such as cross-linked polystyrene and mono, di and trisubstituted alkylpolystyrenes. A preferred cross-linking agent is divinylbenzene in a ratio of 0.5 to 15% of the polystyrene. Typical ratios of cross-linking agent to polymer are the same for the substrate particles as for the layering particles.

A suitable method of forming the cation exchange latex of the present invention is as follows. A monomer phase is formed including the base monomer to be polymerized, typically styrene, and the cross-linking agent, divinylbenzene. This monomer phase is mixed with an aqueous phase including water, an appropriate buffer, and a polymerization catalyst. Pre-mixed monomer phase is contacted with the aqueous phase to form micelles of monomer phase in a continuous aqueous phase. Polymerization proceeds until the monomer micelles are formed into finely dispersed particles formed of insoluble cross-linked resin in the aqueous phase, in the form of a latex.

After the above polymerization procedure is completed, a sulfonating agent is added to sulfonate the resin while maintaining the latex in stable form. In this manner, a cation latex of resin particles containing sulfonate cation-exchanging sites on their available surfaces is formed.

Certain processing conditions have been found to be desirable to maintaining the latex in a stable form, and to forming an ultimate cation exchange pellicular

0134099

product of effective ion exchange capacity. One such parameter is the choice of the sulfonating agent and its method of addition. Preferable sulfonating agents are sulfuric acid, fuming sulfuric acid, or mixtures thereof. The rate of addition should be relatively slow to avoid precipitation. A preferable procedure is to first add concentrated sulfuric acid (e.g., 96%), followed by the addition of fuming sulfuric acid (e.g., 30% sulfur trioxide).

Another important parameter of sulfonation is the concentration of water in the mixture during sulfonation. It has been found that effective sulfonation proceeds best when the water content is less than 50% and, preferably, less than 20%. To accomplish this reduction in the initial water content, which is typically in excess of 90%, sufficient fuming sulfuric acid may be added so that the sulfur trioxide reacts with the water and thereby lowers the effective quantity present in the mixtures so that it does not interfere with the sulfonation reaction. To accomplish this objective, suitable effective acid concentrations are on the order of 50% to 130% based on sulfuric acid, and preferably 80% to 100%. With reference to fuming sulfuric acid, effective acid concentration is meant to include the sulfuric acid in the added acid, added to the sulfuric acid which would be formed by the sulfur trioxide in the aqueous mixture.

The temperature of polymerization may vary over a wide range, e.g., from 0 to 100° C. A preferable temperature range is 20-80° C, while a most preferable one is 25-60° C.

The type of surfactant is important to the maintenance of a stable latex. In that regard, while anionic surfactants may be suitable, it has been found that nonionic surfactants are particularly effective in maintaining the stability of the latex. Suitable nonionic surfactants include ethoxylated alkylphenols, ethoxylated fatty alcohols, alkylphenolated fatty acids and ethoxylated oils. One such surfactant is a nonylphenol (40 mole ethylene oxide adduct) nonionic surfactant manufactured by GAF Corporation under the designation Igepal CO-897.

After the completion of sulfonation, the latex may be diluted with water or neutralized with an appropriate base such as sodium hydroxide. Thereafter, the latex is contacted with substrate to produce the pellicular resin of the present invention.

Contact of latex with substrate may be accomplished in a number of different ways. For example, a column may be prepared by packing the substrate particles to which a latex is added as by using pressure packing, a technique described in the '087 patent. Alternatively, the latex particles may be pumped to the substrate particles in a column, with or without pressure. A still further alternative is to mix the substrate particles and latex, as in a beaker.

It has been found that the pellicular cation-exchange composition formed as set forth above is particularly effective for use as a low capacity ion exchange resin for use in ion chromatography.

The pellicular cation-exchange resin of the foregoing type is particularly useful as packing material for columns to be used in ion exchange chromatography. There, a mixture of cations is resolved by passing through the column, wherein the different ions are separated due to different degrees of attraction by the cation exchanging sides on the packing material. To remove the ions from the column, an eluent, also attracted by such sites, is passed through the column to drive the ions so that they may be collected for analysis. Such eluents typically are of the same charge as the ion to be resolved, and of a different chemical type.

The ion exchange compositions of the present invention are particularly useful for use in high performance low capacity chromatography as described in Patent No. 4,101,460. A typical minimum ion exchange capacity for the resin is at least 0.01 meq./g.

The range of eluents to be employed, their flow rates and other parameters of the ion exchange chromatography are well known to those skilled in the art. The ability to use the high chromatographic efficiency made possible with the packing described herein for cations is also apparent to a skilled worker in the field.

The basic technique for using the cation exchange composition of the present invention for ion chromatography can be found in United States Patent No. 3,920,397. As described therein, two ion exchange resin columns are employed in series, followed by a flow-through conductivity detector. The first column separates the ions of injected sample by elution of the sample through the column using an electrolyte eluent. In the second column, termed a suppressor, electrical conductivity of the electrolyte in the eluent, but not that of the separated ionic species, is suppressed so that the ionic species can be determined by a conductivity cell. This technique is described, for example, in U. S. Patent Nos. 3,897,213, 3,920,397, 3,925,019 and 3,926,559. That portion of the separation technique relating to the separation of cations is incorporated herein by reference.

An improvement over the ion exchange resin type of suppressor is described in published European patent application 32,770, in which an ion exchange membrane, preferably in the form of a fiber, is used. The sample and eluent are passed from the chromatographic separation through the fiber with a flowing regenerant at the outside wall of the fiber. The fiber constitutes an ion exchange membrane partitioning the regenerant from the effluent of chromatographic separation. The membrane passes ions of the same charge as the exchangeable ions and membrane to convert the electrolyte of the eluent to weakly ionized form, followed by the detection of the ions. This type of suppressor is useful in the ion chromatography method of the present invention.

A further disclosure of the nature of the invention is provided by the following specific examples of its practice.

Example 1

This example illustrates the formation of the cation latex of the present invention. A first step, cross link polystyrene latex is formed using the following aqueous and monomer phases.

| Aqueous Phase | | Monomer Phase | |
|---|---|---|---|
| deionized water | 93.31% | styrene | 87.5% |
| sodium bicarbonate | .84% | divinylbenezene | 10% |
| potassium persulfate | .5% | impurities | 2.5% |
| Igepal CO-897 | 5.0% | | |
| sodium metabisulfite | .35% | | |

Monomer phase ratio (weight ratio of monomer phase to aqueous phase) is 0.25.

Procedure: The aqueous phase ingredients except sodium bisulfite are dissolved together and heated to $31^\circ$ C, while purging the bottle with nitrogen. Next, the premixed monomer phase is added. Nitrogen purging is continued for another minute, then sodium bisulfite (dissolved in water) is added. The reaction mixture is placed in a 31° C water bath and tumbled end-for-end at about 50 RPM for 48 hours. A styrene/divinylbenzene latex results with particle diameters about 1000 angstroms. The latex is filtered or centrifuged to remove coaggulum. Then, while cooling, 16 g of concentrated, 96% sulfuric acid is added slowly, to 1.85 g of the raw styrene latex. Next, 8.3 g of 30% fuming sulfuric acid, $H_2SO_4 \cdot SO_3$ is added and the acidified latex is heated to 140° C for 25 minutes. The resulting latex is diluted with water or neutralized with sodium hydroxide and agglomerated with appropriate substrate to produce a media useful for ion exhange chromatography.

Example 2

This example illustrates the formation of an agglomerate in which a monolayer of the cation particles of the preceding example is attached to substrate particles.

The substrate particles are formed by surface amination with a polyvinylbenzyl-chloride resin with 8% divinyl benzene cross-linking at a nominal average diameter of fifteen microns. Amination is performed by first swelling the particles in a suitable solvent, dichlorolomethane. The swelled particles are formed into a slurry with water buffered by sodium carbonate at a pH of 11.5. Then amination proceeds with an appropriate tertiary amine, trimethylamine, in an amount to aminate approximately 5% of the available chloride sites. Such surface aminated particles are packed into a chromatographic column (4mm I.D. by 250 mm long).

Dilute sulfonated latex formed as an Example 1 in 20 to 30% sulfuric acid in water is pumped through the packed column wherein the layering particles irreversibly bind in a monolayer to the latex surface. When the substrate particles are fully loaded, additional latex passes through the column unretained. Approximately 3 ml is sufficient to load the column. The end point of loading is determined by observing the effluent and discontinuing pumping when the latex flows through. After loading, the column is flushed with 0.5 molar $CaCl_2$ solution and then 0.1 NHCl to remove excess latex which may be trapped loosely in the column. This column is now ready for use in ion chromatography.

0134099

Example 3

This example illustrates the use of the column of Example 2 for the separation of cations to be detected by ion chromatography. The apparatus employed comprises the above column in series with a packed bed suppressor column sold by Dionex Corporation of Sunnyvale, California under the designation "Cationic Suppressor Column". The suppressor column is, in turn, connected to a flow through conductivity cell of a conductivity detector also sold by Dionex Corporation.

The cationic sample comprises 50 microliters of a solution including sodium ion (5 ppm), ammonium ion (5 ppm), and potassium ion (10 ppm). The eluent comprises 0.005 molar HCl aqueous solution at a flow rate of 2 ml/minute. The above run produced a chromatogram with three distinct peaks in the sequence of sodium, ammonium, and potassium.

CLAIMS:

1.    A cation exchange latex comprising an aqueous latex of dispersed fine insoluble synthetic resin particles with strong acid cation-exchanging sites at least on their exposed surfaces.

2.    A cation exchange latex as claimed in Claim 1 in which the strong acid cation-exchanging sites comprise sulfonate functional groups.

3.    A cation exchange latex as claimed in Claim 1 or Claim 2 including a non-ionic surfactant.

4.    A cation exchange latex as claimed in any one of the preceding claims in which the particles are formed from cross-linked polystyrene or cross-linked alkyl substituted polystyrene.

5.    A cation exchange latex as claimed inClaim 4 together with a divinyl benzene cross-linking agent.

6.    A cation exchange latex as claimed in any one of the preceding claims in which the particles have a median diameter of less than 0.1 micron.

7.    A cation exchange latex as claimed in any one of the preceding claims in which the particles are characterized by a width of distribution, sigma, of less than about 10%.

8.    A method for forming a cation exchange latex which comprises mixing a monomer phase, comprising a base monomer and a cross-linking monomer, with an aqueous phase including a polymerization catalyst and a surfactant to form micelles of the monomer phase in a continuous aqueous phase, polymerizing the monomer phase to form a latex of finely dispersed particles formed of insoluble cross-linked resin, and adding a sulfonating agent to sulfonate the resin whilst maintaining the latex in a stable form to form a cation exchange latex of the resin particles containing sulfonate cation-exchanging sites at least on their available surfaces.

9. A method as claimed in Claim 8 in which the sulfonating agent is sulfuric acid, fuming sulfuric acid, or a mixture thereof.

10. A method as claimed in Claim 8 or Claim 9 in which the sulfonation is performed by the addition of sufficient sulfonating agent to react with the free water in the aqueous phase and lower the quantity thereof to a sufficient extent that it does not interfere with the sulfonation reaction.

11. A method as claimed in any one of claims 8 to 10 in which the surfactant is non-ionic.

12. A method as claimed in any one of Claims 8 to 11 in which the water content during sulfonation is less than 50%.

13. A strong acid cation exchange composition comprising synthetic resin support particles with anion-exchanging sites at least at their exposed surfaces, and fine synthetic resin layering particles with strong acid cation-exchanging sites at least at their exposed surfaces which attract the anion-exchanging sites of the support particles so that the layering particles are irreversibly attached as a monolayer to the support particles, the layering particles being characterized by a width of distribution, sigma, of less than about 10%.

14. A cation exchange composition as claimed in Claim 13 in which the composition is formed by coating the layering particles in latex form onto the support particles.

15. A cation exchange composition as claimed in Claim 13 or Claim 14 with sufficient ion exchange capacity for use as a bed for the chromatographic separation of cations.

- 13 -

0134099

16.    A cation exchange composition as claimed in any one of Claims 13 to 15 in which the specific exchange capacity of the composition is at least 0.01 meg./gm.

17.    A cation exchange composition as claimed in any one of Claims 13 to 16 in which the layering particles have a median diameter of less than 0.1 micron.

18.    A cation exchange composition as claimed in any one of Claims 13 to 17 in which the strong acid cation-exchange sites comprise sulfonate functional groups.

19.    A method of forming a strong acid cation exchange composition comprising contacting synthetic resin support particles having anion-exchanging sites at least at their exposed surfaces with fine synthetic resin layering particles in a latex, the layering particles having strong acid cation-exchanging sites at least at their exposed surfaces which attract the anion-exchanging sites of the support particles so that the layering particles are irreversibly attched as a monolayer to the support particles.

20.    A method as claimed in Claim 19 in which the cation exchange composition has sufficient ion exchange sites for use in the chromatographic separation of cations.

21.    A method as claimed in Claim 19 or Claim 20 in which the layering particles have a median diameter of less than 0.1 micron.

22.    A method for the chromatographic separation and detection of a plurality of different cations comprising:

(a)    directing a sample comprising a plurality of different cations in an eluent solution through a chromatographic resin bed to resolve said cations, said resin bed comprising a cation exchange composition as claimed in any one of Claims 13 to 18;   and

(b)     detecting the cations in the effluent eluting from step (a).

23.     A method as claimed in Claim 22 in which the eluent step (a) includes an electrolyte, and prior to step (b), the effluent is directed through suppression means in a form to convert the electrolyte of the eluent to a weakly inonized form.

0134099

ELUENT RESERVOIR

SAMPLE INJECTION

CHROMATOGRAPHIC COLUMN

WASTE

REGENERANT RESERVOIR

CONDUCTIVITY DETECTOR

WASTE

FIG. —1